# EUROPEAN PATENT SPECIFICATION

(11) **EP 3 445 086 B1**
(45) Date of publication and mention of the grant of the patent: **04.09.2019**
(21) Application number: 16900818.2
(22) Date of filing: 04.05.2016
(51) Int. Cl.: H04W 36/00

(54) **METHOD AND DEVICE FOR SWITCHING USER EQUIPMENT**
VERFAHREN UND VORRICHTUNG ZUR UMSCHALTUNG EINER BENUTZERVORRICHTUNG
PROCÉDÉ ET DISPOSITIF DE COMMUTATION D'ÉQUIPEMENT UTILISATEUR

(43) Date of publication of application: 20.02.2019
(73) Proprietor: Huawei Technologies Co., Ltd., Longgang District Shenzhen, Guangdong 518129 (CN)
(72) Inventor: ZHU, Fangyuan, Shenzhen Guangdong 518129 (CN); LI, Yan, Shenzhen Guangdong 518129 (CN)
(74) Representative: Epping - Hermann - Fischer
(86) International application number: PCT/CN2016/081030
(87) International publication number: WO 2017/190296

(56) References cited:
- CN-A- 101 594 652
- CN-A- 101 785 334
- CN-A- 102 238 669
- CN-A- 102 238 669
- CN-A- 103 096 405
- CN-A- 105 517 066
- US-A1- 2013 250 917
- US-A1- 2013 310 038
- US-A1- 2014 301 364

## Description

### TECHNICAL FIELD

The present invention relates to the field of wireless communications technologies, and in particular, to a user equipment handover method and a device.

### BACKGROUND

With rapid development of communications technologies, a Long Term Evolution (Long Term Evolution, LTE for short below) network has been widely used. In the LTE network, when a location of user equipment (User Equipment, UE for short below) changes, the UE may be handed over between base stations. During a handover, a network side needs to record location information of the UE, so that the UE can be found at any time, and services are provided to a user uninterruptedly. The UE is handed over mainly in two manners: an X2-interface-based handover and an S1-interface-based handover. The two handover manners are based on different interfaces, which means whether a resource preparation process during a handover is performed by using an X2 interface between the base stations or by using an S1 interface between a base station and an MME. Therefore, if a control plane device remains unchanged, either the X2-interface-based handover or S1-interface-based handover may be used; or if the control plane device changes, the S1-interface-based handover needs to be used.

In a core network, there are specific constraints for implementation of the two handover manners. A control plane device cannot change in the X2-interface-based handover, and the handover can be performed only between eNBs connected to a same control plane device. A control plane device can change in the S1-interface-based handover; however, more signaling is to be exchanged between an access network and the core network. In the preceding handover manners, handover modes are different. Consequently, once a handover across control planes is performed, a handover delay is caused, and handover efficiency is relatively low.

CN 102 238 669 A relates to a method for performing X2 handover by a home base station, HeNB. A mobility management entity, MME, or a home base station gateway, HeNB GW, sends a MME identity of the MME of a user equipment, UE, to a source S-HeNB; when the S-HeNB decides to switch the UE to a target T-HeNB, the S-HeNB sends a handover request message including the MME identity to the T-HeNB; the T-HeNB sends a path switch request message to the MME; and the MME sends a path switch request acknowledgement message to T-HeNB.

US 2014/301364 A1 relates to a method for supporting, by a mobility management entity, MME, selected IP traffic offload, SIPTO, when a user equipment, UE, handovers from a source base station to a target base station in a mobile communication system. The method comprises the steps of: acquiring a local home network id of the source base station; acquiring a local home network id of the target base station from the target base station; and determining whether the UE has moved out of a local home network to which the source base station belongs according to the local home network id of the source base station and the local home network id of the target base station.

### SUMMARY

Embodiments of the present invention are defined by the claims. A user equipment handover method and a device are provided. The technical solutions are as follows:
According to a first aspect, a user equipment UE handover method is provided, including:
obtaining, by a target base station, an identifier of a source control plane and a context identifier of the UE from a source base station; and sending, by the target base station, the identifier of the source control plane and the context identifier of the UE to a target control plane device, where the identifier of the source control plane and the context identifier of the UE are used to obtain a context of the UE.

According to the technical solution provided in this embodiment of the present invention, a target control plane can obtain, from the target eNB, the ID of the source control plane and the context ID of the UE that are allocated by the source control plane, to directly request the
context of the UE from the source control plane, so that the UE is handed over to a target cell and an X2-interface-based handover across control planes is implemented. This implements a unified context obtaining process in a core network, simplifies core network implementation, and reduces a handover delay and improves handover efficiency during the handover across control planes.

In a first possible implementation of the first aspect, the obtaining, by a target base station, an identifier of a source control plane and a context identifier of UE from a source base station includes: automatically establishing, by the target base station, a connection between the target base station and the source base station, and obtaining, by the target base station, the identifier of the source control plane and the context identifier of the UE from the source base station. After the process of automatically establishing a connection between the
base stations, the target eNB can directly interact with the source eNB, avoiding a process such as forwarding by the core network, and greatly reducing a delay.

Based on any one of the foregoing possible implementations, in a second possible implementation of the first aspect, the method further includes:
determining, by the target base station based on the identifier of the source control plane, whether the target base station is connected to the source control plane; and if the target base station is not connected to the source control plane, selecting, by the target base station, a control plane as a target control plane. This provides a possibility for implementation of a handover across control planes.

Based on any one of the foregoing possible implementations, in a second possible implementation of the first aspect, the method further includes: triggering, by the target base station, release of resources of a source side device. The source side device is a device such as a source control plane device or a source base station. A resource waste of the source side device is avoided by monitoring resource release in a timely manner.

In a third possible implementation of the first aspect, the triggering, by the target base station, release of resources of a source side device includes: when the target base station receives a source forwarding plane change flag sent by the target control plane, sending by the target base station, a resource release message to the source base station, where the resource release message carries a source forwarding plane gateway change flag.

Based on any one of the foregoing possible implementations, in a fourth possible implementation of the first aspect, the control plane device includes a mobility management entity or a centralized control plane device. The method may be applied to a conventional EPC architecture or a CU separation architecture.

According to a second aspect, a user equipment UE handover method is provided, including: receiving, by a target control plane device, an identifier of a source control plane and a context identifier of UE that are sent by a target base station; and obtaining, by the target control plane device, a context of the UE based on the identifier of the source control plane and the context identifier of the UE. Further, the target eNB determines, based on information such as the identifier, provided by a source eNB, of the source control plane, whether a handover across control planes is to be performed; and if a handover across control planes is to be performed, selects a new control plane as a target control plane based on a load status, and sends the identifier of the source control plane and the context ID of the UE to the target control plane. The new control plane determines the source control plane based on the identifier of the source control plane, and obtains the context of the UE from the source control plane, implementing an X2-interface-based handover method across control planes.

In a first possible implementation of the second aspect, the obtaining, by the target control plane device, a context of the UE based on the identifier of the source control plane and the context identifier of the UE includes:
addressing, by the target control plane device, to the source control plane based on the identifier of the source control plane, and sending a UE context request message to the source control plane, where the UE context request message carries the context identifier of the UE; and receiving, by the target control plane device, the context of the UE returned by the source control plane.

In a second possible implementation of the second aspect, the obtaining, by the target control plane device, a context of the UE based on the identifier of the source control plane and the context identifier of the UE includes: obtaining, by the target control plane device, the context of the UE from a database by using the identifier of the source control plane and the context identifier of the UE as index information.

In a third possible implementation of the second aspect, the method further includes: determining, by the target control plane device, whether a forwarding plane gateway needs to change; and if the forwarding plane gateway needs to change, sending, by the target control plane device, a source forwarding plane change flag to the target base station, where the source forwarding plane change flag is used to trigger release of resources of a source side device.

In a fourth possible implementation of the second aspect, the control plane device includes a mobility management entity or a centralized control plane device.

According to a third aspect, a wireless communications system is provided, where the wireless communications system includes at least user equipment UE, a source base station, a target base station, a source control plane device, and a target control plane device, where
the target base station is configured to: obtain an identifier of a source control plane and a context identifier of the UE from the source base station, and send the identifier of the source control plane and the context identifier of the UE to the target control plane device; and
the target control plane device is configured to: receive the identifier of the source control plane and the context identifier of the UE, and obtain a context of the UE based on the identifier of the source control plane and the context identifier of the UE.

The target base station and the target control plane device in the wireless communications system are further configured to implement either of the user equipment handover methods in the first aspect and the second aspect.

According to a fourth aspect, a base station is provided, including a plurality of function modules, configured to implement the user equipment handover method according to any one of the foregoing possible implementations of the first aspect.

According to a fifth aspect, a control plane device is provided, including a plurality of function modules, configured to implement the user equipment handover method according to any one of the foregoing possible implementations of the second aspect.

According to a sixth aspect, a base station is provided, where the base station includes a transmitter, a receiver, a memory, and a processor separately connected to the transmitter, the receiver, and the memory. Certainly, the base station may further include general purpose components such as an antenna, a baseband processing component, an intermediate-frequency processing component, and an input/output apparatus, and no limitation is imposed thereon in this embodiment of the present invention.

The base station is configured to perform the following operations: obtaining an identifier of a source control plane and a context identifier of the UE from a source base station; and sending, by the target base station, the identifier of the source control plane and the context identifier of the UE to a target control plane device, where the identifier of the source control plane and the context identifier of the UE are used to obtain a context of the UE.

In a first possible implementation of the sixth aspect, the base station is configured to perform the following operations: automatically establishing a connection between the target base station and the source base station, and obtaining the identifier of the source control plane and the context identifier of the UE from the source base station.

Based on any one of the foregoing possible implementations, in a second possible implementation of the first aspect, the base station is configured to perform the following operations: determining, based on the identifier of the source control plane, whether the target base station is connected to the source control plane; and if the target base station is not connected to the source control plane, selecting a control plane as a target control plane.

Based on any one of the foregoing possible implementations, in a second possible implementation of the first aspect, the base station is configured to perform the following operation: triggering release of resources of a source side device.

In a third possible implementation of the sixth aspect, the base station is configured to perform the following operation: when a source forwarding plane change flag sent by the target control plane is received, sending a resource release message to the source base station, where the resource release message carries a source forwarding plane gateway change flag.

Based on any one of the foregoing possible implementations, in a fourth possible implementation of the sixth aspect, the control plane device includes a mobility management entity or a centralized control plane device.

According to a seventh aspect, a control plane device is provided, where the control plane device includes a transmitter, a receiver, a memory, and a processor separately connected to the transmitter, the receiver, and the memory. Certainly, the control plane device may further include general purpose components such as an antenna, a baseband processing component, an intermediate-frequency processing component, and an input/output apparatus, and no limitation is imposed thereon in this embodiment of the present invention.

The control plane device is configured to perform the following operations: receiving an identifier of a source control plane and a context identifier of UE that are sent by a target base station; and obtaining a context of the UE based on the identifier of the source control plane and the context identifier of the UE.

In a first possible implementation of the seventh aspect, the control plane device is configured to perform the following operations: addressing to the source control plane based on the identifier of the source control plane; sending a UE context request message to the source control plane, where the UE context request message carries the context identifier of the UE; and receiving the context of the UE returned by the source control plane.

In a second possible implementation of the seventh aspect, the control plane device is configured to perform the following operation: obtaining the context of the UE from a database by using the identifier of the source control plane and the context identifier of the UE as index information.

In a third possible implementation of the seventh aspect, the control plane device is configured to perform the following operations: determining whether a forwarding plane gateway needs to change; and if the forwarding plane gateway needs to change, sending a source forwarding plane change flag to the target base station, where the source forwarding plane change flag is used to trigger release of resources of a source side device.

In a fourth possible implementation of the seventh aspect, the control plane device includes a mobility management entity or a centralized control plane device.

It should be understood that, the foregoing general description and the following detailed description are merely an example and an interpretation, and are not intended to limit the present invention.

### BRIEF DESCRIPTION OF DRAWINGS

The drawings herein are incorporated in this specification and constitute a part of this specification, show embodiments conforming to the present invention, and explain principles of the present invention together with this specification.
FIG. 1 is a schematic diagram of a conventional evolved packet core (Evolved Packet Core, EPC for short below) network architecture;
FIG. 2 is a schematic diagram of a self-organizing network (Self Organization Network, SON for short below) based on a conventional EPC network architecture;
FIG. 3 is an interaction flowchart of a UE handover method based on the conventional EPC network architecture shown in FIG. 1;
FIG. 4A and FIG. 4B are an interaction flowchart of another UE handover method based on the conventional EPC network architecture shown in FIG. 1;
FIG. 5 is a schematic diagram of a control and user plane (Control/User plane, CU for short below) separation network architecture;
FIG. 6 is an interaction flowchart of a UE handover method based on the CU separation network architecture shown in FIG. 5;
FIG. 7A and FIG. 7B are an interaction flowchart of another UE handover method based on the CU separation network architecture shown in FIG. 5;
FIG. 8 is a schematic structural diagram of a base station according to an embodiment of the present invention;
FIG. 9 is a schematic structural diagram of a control plane device according to an embodiment of the present invention;
FIG. 10 is a schematic structural diagram of a base station according to an embodiment of the present invention; and
FIG. 11 is a schematic structural diagram of a control plane device according to an embodiment of the present invention.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with the present invention. On the contrary, they are only examples of apparatuses and methods that are described in the appended claims in detail and that are consistent with some aspects of the present invention.

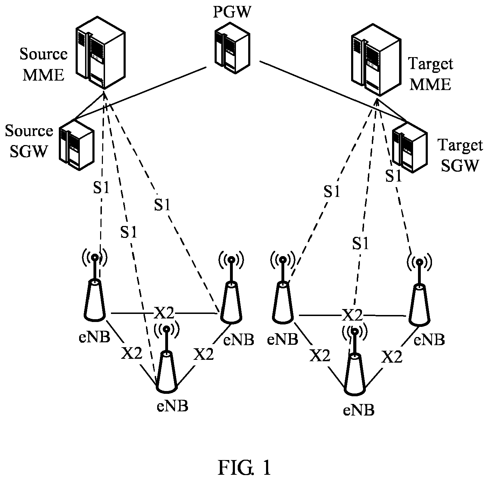

In the following, a conventional EPC network architecture shown in FIG. 1 is used as an example to briefly describe some devices used in the embodiments of the present invention:
Mobility management entity (Mobility Management Entity, MME for short below): The MME is responsible for user mobility management, including user context and mobile state management, user temporary identity allocation, and user authentication and authorization.

Serving gateway (Serving Gateway, SGW for short below): The SGW is a forwarding plane anchor between 3GPP access networks; forwards packets of UEs through transmission tunnels between the SGW and a base station and between the SGW and a P-GW; is responsible for bearer establishment, modification, and release, and QoS control, and supports main QoS parameters of a bearer, including a QCI, an ARP, and a GBR; and is responsible for storing information such as an EPS bearer context including a tunnel identifier and a user identity.

Packet data network gateway (Packet Data Network Gateway, PGW for short below): The PGW is a forwarding plane anchor between a 3GPP access network and a non-3GPP access network, and is an interface between the 3GPP access network and an external packet data network (Packet Data Network, PDN for short below). The PGW may be integrated with the SGW, and is responsible for IP address allocation; bearer establishment, modification, and release; selection of a policy and charging rules function (Policy and Charging Rules Function, PCRF for short below) unit; QoS control; implementation of a policy and charging enforcement function; and storage of an evolved packet system (Evolved Packet System, EPS for short below) bearer context including a tunnel identifier and a user identity.

eNB: The eNB is configured to: (1) implement a radio resource management related function, including radio bearer control; (2) transmit a paging message, where: after receiving a paging message from a control plane, the eNB sends the paging message to an air interface; and (3) during a handover, determine the handover and prepare resources required for the handover.

Gateway user plane (Gateway-User plane, GW-U for short below): The GW-U has functions such as forwarding, encapsulation, and statistics collection of a user packet.

Control plane (Controller): The control plane integrates functions of devices such as the MME and a gateway control plane, is responsible for user mobility management, and further has functions such as IP address allocation, selection of a gateway user plane device, bearer management, and generation of a gateway user plane forwarding rule.

To help an LTE operator better manage a huge quantity of base stations that may be provided by different device vendors in a network, reduce operating expenses, and reduce human participation, a concept of SON has been proposed. A main idea of the SON is to implement some autonomous functions of a wireless network. The SON mainly includes three functions: self-configuration (Self-configuration), self-optimization (Self-optimization), and self-healing (Self-healing). The self-configuration function includes automatically obtaining an IP address and configuring an automatic neighbor relation. Automatically obtaining an IP address means that an eNB automatically obtains an IP address after being powered on, and obtains IP addresses of a network management system and an access gateway. Configuring an automatic neighbor relation means that during automatic establishmentment, an eNB establishes an automatic neighbor relation by using a neighbor relation list delivered by the network. After entering a working state, the eNB optimizes the automatic neighbor relation, reducing labor costs of optimization and planning.

eNB automatic establishment is one of most basic functions of the SON. According to a standard protocol, when accessing the network, a new eNB can automatically establish an IP connection between the eNB and an element management (EM), and can automatically download software, a wireless parameter, and data related to transmission configuration. X2 interfaces can be automatically established. After the establishment is complete, the eNB may check the working state of the eNB and report a check result to a network management center.

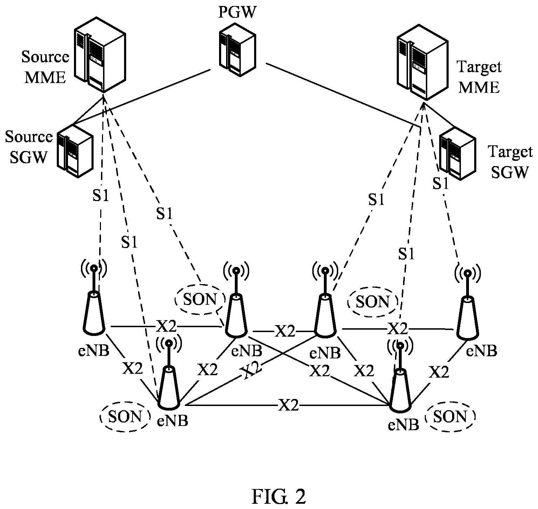

FIG. 2 is a system architecture diagram according to an embodiment of the present invention. Referring to FIG. 2, a system includes a source MME, a target MME, a source SGW, a target SGW, and a PGW, and further includes a plurality of eNBs. Certainly, the system should further include devices such as UE, which are not shown in the figure.

It should be noted that a source eNB is an eNB connected before a location of UE changes, and a target eNB is an eNB selected by the UE after the location changes and the source eNB determines that a handover is required.

An X2 interface is provided between eNBs connected to a same MME, and an S1 interface is provided between the MME and an eNB. Through a self-configuration process of an eNB supporting a SON, an IP address can be automatically obtained, and an X2 interface between eNBs connected to different MMEs can be configured. In this way, eNBs connected to different MMEs can directly interact with each other by using an automatically configured X2 interface, to implement an X2-based handover. During the X2-based handover, a source eNB automatically obtains an address of a target eNB without participation of a core network, and the eNBs may be controlled by different control plane devices.

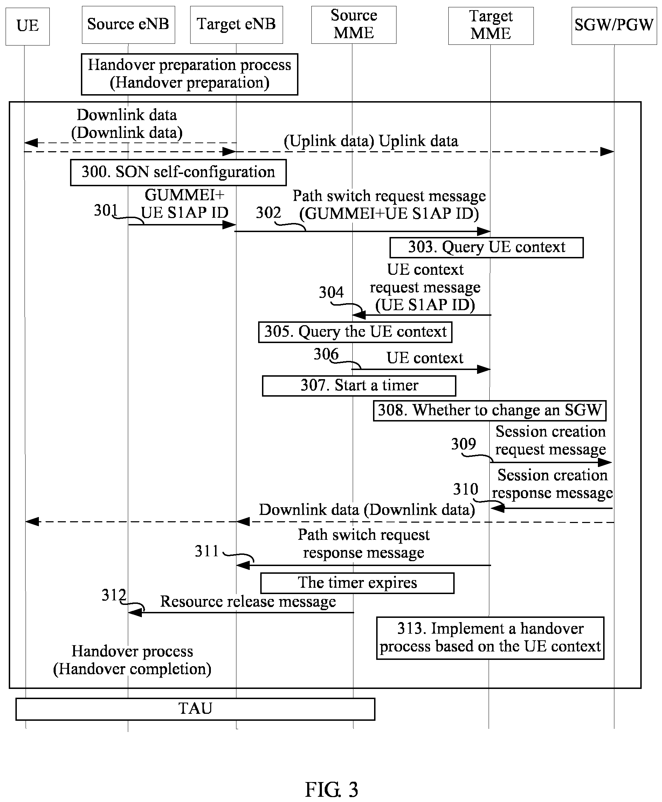

FIG. 3 is an interaction flowchart of a UE handover method according to an embodiment of the present invention. An interaction process in FIG. 3 is performed based on the system architecture shown in FIG. 1, and is used to describe an interaction scenario in which an SGW remains unchanged. Specifically, this embodiment includes the following steps.

300. A source eNB performs X2-interface-based connection to a target eNB through SON automatic configuration.

Herein, a decision-making process during a handover is not described in detail. How UE specifically reports a measurement report and how the source eNB determines, based on the measurement report or other information of the UE, whether to perform a handover or what kind of handover is to be performed are not limited in this embodiment of the present invention.

During handover preparation, the source eNB makes a handover decision to determine which eNB is used as the target eNB to perform a handover. If the source eNB does not store an IP address of the target eNB, it is possible that the source eNB and the target eNB are not connected to a same MME. In this case, step 300 needs to be performed to automatically configure an X2 interface between the eNBs.

301. The source eNB sends a handover request message to the target eNB, where the handover request message carries a GUMMEI and an MME UE S1AP ID of a source MME.

Further, if determining, based on the GUMMEI of the source MME, that the target eNB is not connected to the source MME, the target eNB selects, based on a load status, a new MME to perform a handover.

Selecting an MME based on the load status means that the target eNodeB needs to select an MME pool (Pool) to serve the UE. There are many MMEs in an MME pool. The eNodeB selects an MME pool based on a network topology and an average load of the MME pool, so that a probability of changing a serving MME when the UE moves subsequently is reduced.

302. When receiving the handover request message, the target eNB sends a path switch request (Path switch request) message to a target MME.

The path switch request message includes a cell global identifier (tracking area identity (Tracking Area Identity, TAI for short below)+E-UTRAN cell global identifier (E-UTRAN Cell Global Identifier, ECGI for short below)) of a target cell, a converted EPS bearer list, UE security capabilities (Security Capabilities), a closed user group ID (Closed Subscriber Group Identity, CSG ID for short below), and a cell access mode (Cell Access Mode, CAM for short below). Different from that in the prior art, the path switch request message further includes an identifier of the source control plane, namely a globally unique MME identifier (Globally Unique MME Identifier, GUMMEI for short below), and a user context identifier UE S1AP ID (user context identifier) of the source MME. A context of the UE can be obtained from the source MME based on the source MME GUMMEI (control plane identifier) and the user context identifier UE S1AP ID (user context identifier) of the source MME that are carried in the path switch request message.

A GUMMEI is a part of a globally unique temporary identity (Globally Unique Temporary Identity, GUTI for short below), and may be used to uniquely identify an MME that allocates the GUTI. An MME UE S1AP ID is used by an MME to uniquely identify UE on an S1 interface.

303. When receiving the path switch request message sent by the target eNB, the target MME queries a context of UE locally based on the UE S1AP ID of the source MME.

When receiving the path switch request message sent by the target eNB, the target MME may learn that a handover event is requested to be performed, and therefore may first attempt to locally query the context of the UE.

304. When failing to obtain the context of the UE locally through query, the target MME sends a UE context request message to the source MME indicated by the source MME GUMMEI, where the UE context request message carries the UE S1AP ID of the source MME.

Step 304 may include a process in which the target MME addresses to the source control plane based on the identifier of the source control plane and sends the UE context request message to the source MME.

305. When receiving the UE context request message, the source MME queries the context of the UE locally based on the UE S1AP ID of the source MME.

The context of the UE includes an IMSI, a UE core network capability, a TA list, an ID of a cell, on a source side, on which the UE camps, an address and a TEID of an SGW/PGW on an S11 interface, a PDN type, an EPS bearer identifier, and an access point name (Access Point Name, APN for short below) of a user, QoS of a default EPS bearer, and the like. The S11 interface is an interface between an MME and an SGW.

306. The source MME sends the context of the UE to the target MME.

307. After the source MME sends the context of the UE to the target MME, the source MME starts a timer to monitor when to release UE resources stored by the source eNB and locally stored UE resources.

308. After receiving the context of the UE, the target MME determines, based on the context of the UE and the target cell ID, whether to change an SGW.

The target MME may determine, based on the address, carried in the context of the UE, of the SGW/PGW on the S11 interface and the target cell ID, whether a path between the SGW and the target cell is an optimized path. If the path is an optimized path, it may be determined not to change the SGW. If the path is not an optimized path, it may be determined to change the SGW.

309. If determining not to change the SGW, the target MME sends a session creation request message to the SGW.

The address of the SGW on the S11 interface can be obtained in step 305. Therefore, in step 309, the session creation request message may be sent to the SGW based on the address obtained in step 305. The session creation request message includes a to-be-established EPS bearer, the APN of the user, an address and a TEID, on a user plane, of the target eNB, and the like.

310. The SGW/PGW sends a session creation response message to the target MME.

In the scenario of FIG. 3, neither the SGW nor the PGW has changed.

311. When the target MME receives the session creation response message, the target MME sends a path switch request response message to the target eNB.

The path switch request response message includes an address and a TEID that are allocated on the user plane by the SGW for uplink data.

312. After the timer expires, the source MME sends a resource release message to the source eNB, to instruct the source eNB to release locally stored UE resources.

Further, when the timer expires, the source MME may also release UE resources locally stored by the source MME.

313. The target MME implements a handover process based on the context of the UE.

The specific handover process may include a process in which the target MME synchronizes the UE to the target cell based on the context of the UE, and the like. No further details are provided in this embodiment of the present invention.

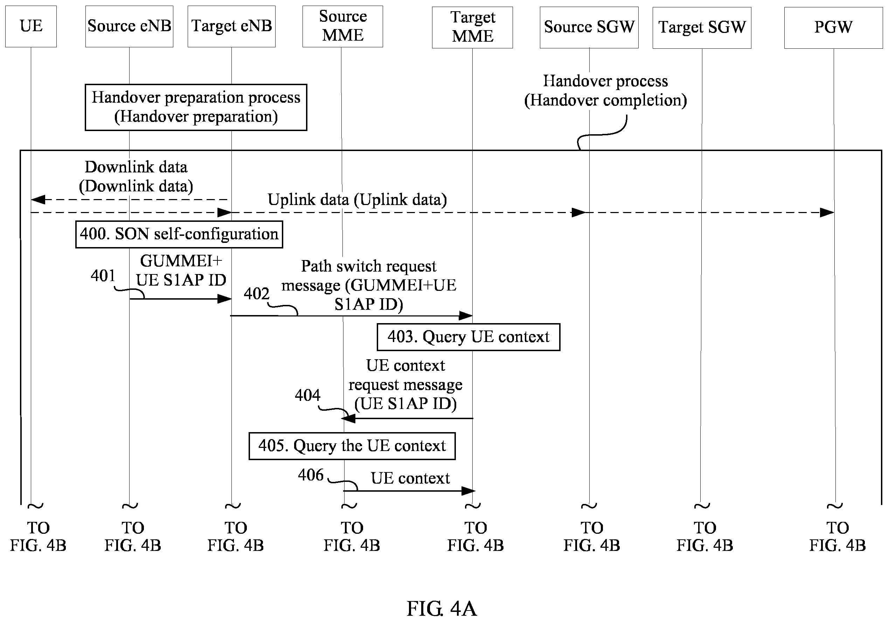

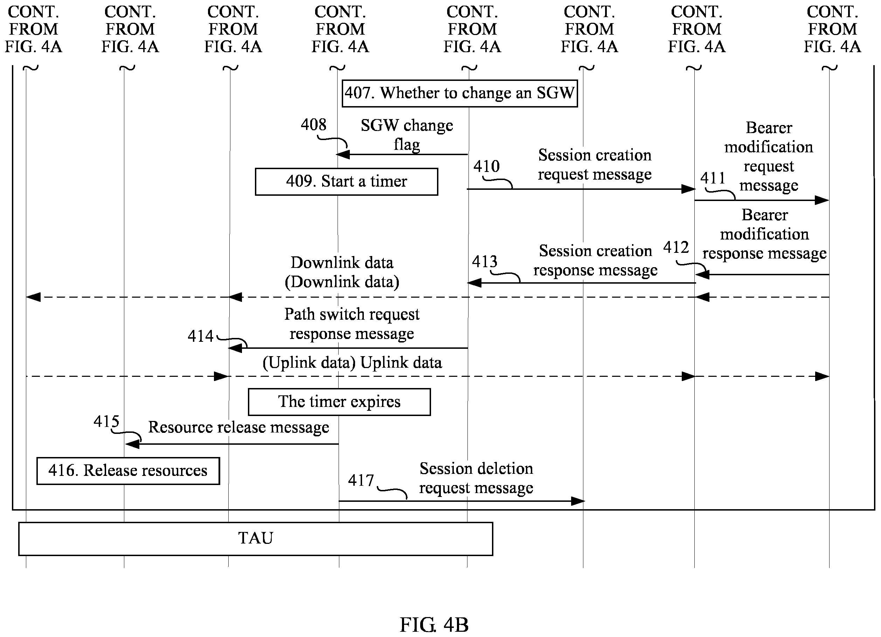

The embodiment shown in FIG. 3 provides a handover method performed in a scenario in which an SGW does not need to change. However, during a handover, to optimize a routing path, or when there is no interface to connect a source SGW and a target MME, an SGW may change. FIG. 4A and FIG. 4B are an interaction flowchart of a handover method according to an embodiment of the present invention, and is used to describe an interaction scenario in which an SGW changes. Specifically, this embodiment includes the following steps.

400. A source eNB performs X2-interface-based connection to a target side eNB through SON automatic configuration.

Step 400 is similar to step 300, and is not described herein again.

401. The source eNB sends a handover request message to the target eNB, where the handover request message carries a GUMMEI and an MME UE S1AP ID of a source MME.

402. The target eNB sends a path switch request (Path switch request) message to a target MME.

403. When receiving the path switch request message sent by the target eNB, the target MME queries a context of UE locally based on the UE S1AP ID of the source MME.

404. When failing to obtain the context of the UE locally through query, the target MME sends a UE context request message to the source MME indicated by the source MME GUMMEI, where the UE context request message carries the UE S1AP ID of the source MME.

405. When receiving the UE context request message, the source MME queries the context of the UE locally based on the UE S1AP ID of the source MME.

406. The source MME sends the context of the UE to the target MME.

407. After receiving the context of the UE, the target MME determines to change an SGW.

408. The target MME sends a UE context response message to the source MME, where the UE context response message carries an SGW change flag (SGW change flag).

409. When receiving the UE context response message of the target MME, the source MME learns that the SGW changes on the target MME side, and starts a timer to monitor when to release UE resources stored by the source eNB and UE resources stored by the source SGW.

In steps 407 and 408, the target MME may determine to change the SGW to optimize a routing path or when there is no interface to connect the source SGW and the target MME, and therefore needs to inform the source MME of the SGW change.

410. The target MME sends a session creation request message to a target SGW, where the session creation request message includes an address and a TEID of the target eNB, a bearer context, an address and a TEID of a PGW, and the like that are used on a user plane.

411. After receiving the session creation request message, the target SGW sends a bearer modification request message to the PGW based on the received PGW address, where the bearer modification request message includes an address and a TEID of the SGW that are allocated by the target SGW for downlink data.

412. When receiving the bearer modification request message, the PGW sends a bearer modification response message to the target SGW, where the bearer modification response message includes an address and a TEID of the PGW that are allocated by the PGW for uplink data.

In addition, the bearer modification response message may further include a charging ID, which is used by the PGW to charge a packet.

413. After receiving the bearer modification response message, the target SGW sends a session creation response message to the target MME, where the session creation response message includes an address and a TEID that are allocated, on the user plane, by the target SGW for the uplink data.

414. The target MME sends a path switch request response message to the target eNB, where the path switch request response message includes the address and the TEID that are allocated, on the user plane, by the target SGW for the uplink data.

415. When the timer of the source MME expires, the source MME sends a resource release message to the source eNB.

416. When receiving the resource release message, the source eNB releases UE resources.

The UE resources may include radio bearers of the UE and all control plane resources related to the context of the UE.

417. The source MME sends a session deletion request message to the source SGW, where the session deletion request message is used to release the UE resources stored by the source SGW.

The embodiments of FIG. 3 and FIG. 4A and FIG. 4B separately describe a UE handover process in the conventional EPC network architecture. The target MME may obtain, from the target eNB, the ID of the source control plane and the context ID of the UE that are allocated by the source MME, to directly request the context of the UE from the source MME, so that the UE is handed over to the target cell and an X2-interface-based handover across control planes is implemented. This implements a unified context obtaining process in a core network, simplifies core network implementation, and reduces a handover delay and improves handover efficiency during the handover across control planes.

Further, the target eNB determines, based on information such as the identifier, provided by the source eNB, of the source control plane, whether a handover across MMEs is to be performed; and if a handover across MMEs is to be performed, selects a new MME as a target MME based on a load status, and sends the identifier of the source control plane and the context ID of the UE to the target MME. The new MME determines the source MME based on the identifier of the source control plane, and obtains the context of the UE from the source MME, implementing an X2-interface-based handover method across control planes.

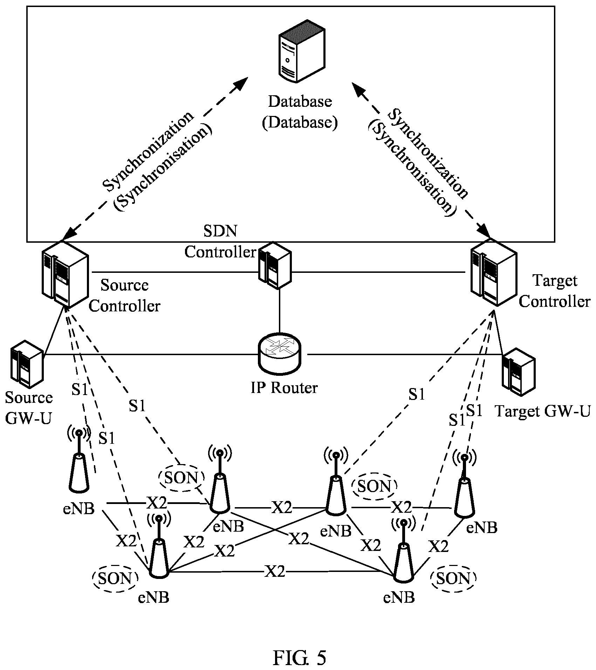

FIG. 5 is an architectural diagram of a CU separation mobile network system according to an embodiment of the present invention. A CU separation network architecture decouples a control plane function of a mobile gateway from a forwarding plane function of the mobile gateway, and combines the separated control plane function (GW-C) with conventional 3GPP control network elements such as an MME and a PCRF into a unified control plane. A forwarding plane GW-U includes a forwarding plane (SGW-U) of an S-GW and a forwarding plane (PGW-U) of a P-GW Referring to FIG. 5, the system includes a source control plane device, a target control plane device, a source GW-U, a target GW-U, an SDN control device, and the like, and further includes a plurality of eNBs. Certainly, the system should further include devices such as UE, which are not shown in the figure. Different from the architecture shown in FIG. 1, the system shown in FIG. 5 further includes a database (as shown in a dashed-line box in the figure). After UE accesses a network, the control plane Controller synchronizes a context of the UE to the database, so that the database can centrally manage contexts.

Neighboring eNBs in the system can automatically establish an X2 interface by using a SON. During handover preparation, a source eNB makes a handover decision to determine which target eNB to be handed over to. If the source eNB does not store an IP address of the target eNB, the source eNB automatically establishes an X2-interface-based connection to the target side eNB through SON automatic configuration.

Then, the source eNB sends a handover request message, which carries an ID of the source controller, to the target eNB; and if the target eNB is not connected to the source controller, selects, based on a load status, a new controller to perform a handover. The target eNB needs to place the source control plane identifier ID and a user context identifier ID in a path switch request message, so that the target controller obtains the context of the UE from the source controller. Then, the target controller synchronizes the UE to a target cell based on the context of the UE, and completes a handover process.

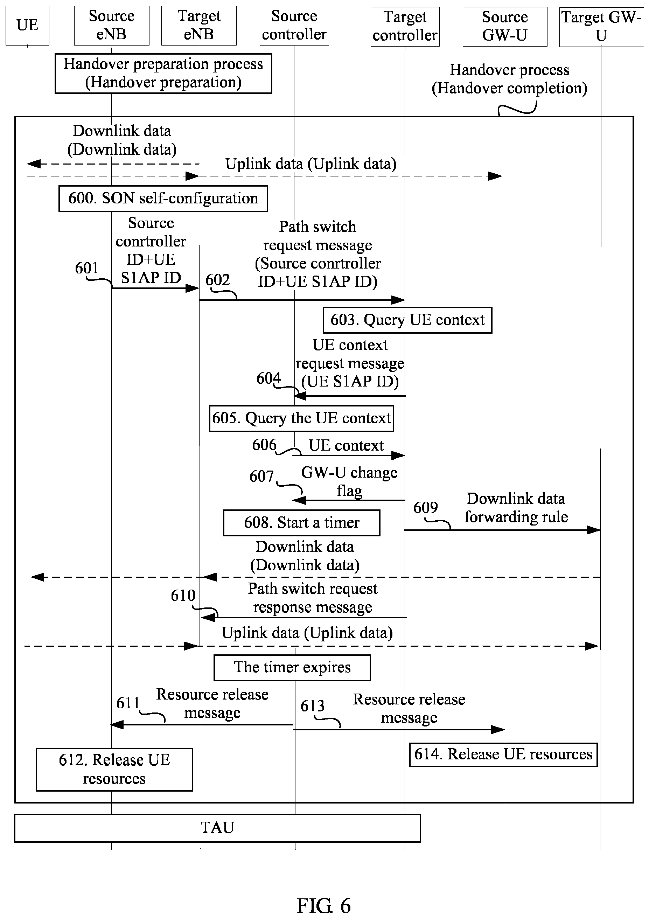

FIG. 6 shows a handover process in a CU separation mobile network architecture. After a control plane is separated from a user plane, a GW-U is connected to only one controller. Therefore, a GW-U change definitely occurs in a handover across controllers. In this case, an embodiment of a handover method applicable to a scenario in which a GW-U changes is provided. A specific process is shown in Figure 6.

600. A source eNB performs X2-interface-based connection to a target eNB through SON automatic configuration.

Step 600 is similar to step 300, and is not described herein again.

601. The source eNB sends a handover request message to the target eNB, where the handover request message carries a source controller ID and a user context identifier UE S1AP ID of a source controller.

602. The target eNB sends a path switch request (Path switch request) message to a target controller.

The path switch request message includes a cell global identifier (TAI+ECGI) of a target cell, a converted EPS bearer list, UE security capabilities, a CSG ID, and a cell access mode. Different from that in the prior art, the path switch request message further includes the source controller ID (control plane identifier) and the user context identifier UE S1AP ID (user context identifier) of the source controller. A context of UE can be obtained from the source controller based on the source controller ID (control plane identifier) and the user context identifier UE S1AP ID (user context identifier) of the source controller that are carried in the path switch request message.

The source controller ID uniquely identifies the source control plane, and the UE S1AP ID is used by the controller to uniquely identify the UE on an S1 interface.

603. When receiving the path switch request message sent by the target eNB, the target controller queries a context of UE locally based on the UE S1AP ID of the source controller.

604. When failing to obtain the context of the UE locally through query, the target controller sends a UE context request message to the source controller indicated by the source controller ID, where the UE context request message carries the UE S1AP ID of the source controller.

605. When receiving the UE context request message, the source controller queries the context of the UE locally based on the UE S1AP ID of the source controller.

606. The source controller sends the context of the UE to the target controller.

607. After receiving the context of the UE, the target controller sends a UE context response message to the source controller, where the UE context response message carries a GW-U change flag.

After obtaining the context of the UE, the target controller may determine, based on a location of a cell on which the UE camps before a handover and a location of a target cell, whether to change a forwarding plane gateway. If it is determined to change the forwarding plane gateway, the target controller may trigger a resource release process of a source side device, and implement a process of sending the UE context response message in step 607 to inform the source controller of a GW-U change, so that the source controller monitors release of source side resources.

608. When receiving the UE context response message of the target controller, the source controller learns that a GW-U changes on the target controller side, and starts a timer to monitor when to release UE resources stored by the source eNB and UE resources stored by the source GW-U.

609. After the target controller receives the context of the UE, the target controller sends a downlink data forwarding rule to a target GW-U to instruct the gateway forwarding plane how to process an IP packet sent by the UE.

610. The target controller sends a path switch response message to the target eNB.

611. When the timer of the source controller expires, the source controller sends a resource release message to the source eNB.

Further, when the timer expires, the source controller may also release UE resources locally stored by the source controller.

612. When receiving the resource release message, the source eNB releases UE resources.

613. The source controller sends a resource release message to the source GW-U.

614. When receiving the resource release message, the source GW-U releases UE resources.

It should be noted that step 611 and step 613 may be performed at a same time, or may be performed one after another. An actual sequence for performing step 611 and step 613 is not limited in this embodiment of the present invention, provided that the source side devices can separately release the UE resources when the timer of the source controller expires.

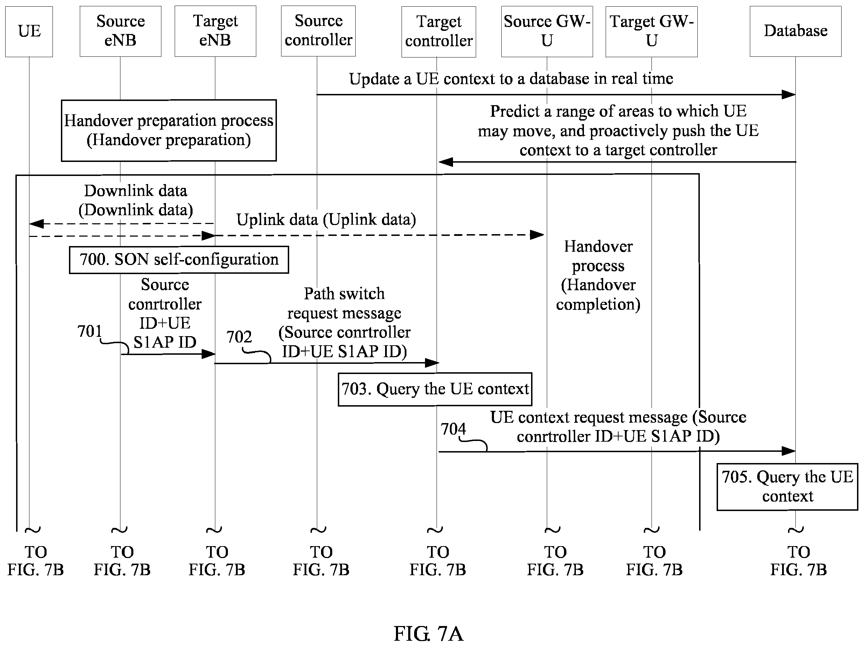

The UE context in the embodiment shown in FIG. 6 is sent by the source controller to the target controller. In another embodiment, a UE context may alternatively be obtained from a database, as shown in FIG. 7A. When UE accesses a network, any controller, such as the source controller in this embodiment, updates a locally cached context of the UE to the database in real time. The database centrally manages contexts stored by the control plane, and can implement functions such as dynamic resource migration and disaster recovery backup.

700. A source eNB performs X2-interface-based connection to a target eNB through SON automatic configuration.

Step 700 is similar to step 300, and is not described herein again.

701. The source eNB sends a handover request message to the target eNB, where the handover request message carries a source controller ID and a user context identifier UE S1AP ID of a source controller.

702. The target eNB sends a path switch request (Path switch request) message to a target controller.

Further, if the target eNB is not connected to the source controller, a new controller is selected based on a load status to perform a handover, and the selected controller is the target controller.

The path switch request message includes a cell global identifier (TAI+ECGI) of a target cell, a converted EPS bearer list, UE security capabilities, a CSG ID, and a cell access mode. Different from that in the prior art, the path switch request message further includes the source controller ID (control plane identifier) and the user context identifier UE S1AP ID (user context identifier) of the source controller. The context of the UE can be obtained from the source controller based on the source controller ID (control plane identifier) and the user context identifier UE S1AP ID (user context identifier) of the source controller that are carried in the path switch request message.

The source controller ID uniquely identifies the source control plane, and the UE S1AP ID is used by the controller to uniquely identify the UE on an S1 interface.

703. When receiving the path switch request message sent by the target eNB, the target controller queries a context of the UE locally based on the UE S1AP ID of the source controller.

Before the UE is moved to the target cell, the database predicts, based on a movement track or a location of the UE, a range of areas to which the UE may move, and proactively pushes the context of the UE to the target controller. If the context of the UE cannot be obtained through query in step 703, the previous intelligent pushing by the database fails, and the context information of the UE needs to be obtained from the database by using the source controller ID and the UE S1AP ID of the source controller that are obtained previously.

704. When failing to obtain the context of the UE locally through query, the target controller sends a UE context request message to the database, where the UE context request message carries the source controller ID and the UE S1AP ID of the source controller.

705. When receiving the UE context request, the database queries the context of the UE in the database.

The context of the UE includes an IMSI, a UE core network capability, a TA list, an ID of a cell, on a source side, on which the UE camps, an EPS bearer identifier, an APN of a user, QoS of a default EPS bearer, and the like.

706. The database sends the context of the UE to the target controller.

Steps 704 to 706 are a process in which the target control plane device obtains the context of the UE from the database by using the source control plane identifier and the context identifier of the UE as index information.

707. After the target controller receives the context of the UE, the target controller sends a downlink data forwarding rule to a target GW-U to instruct the gateway forwarding plane how to process an IP packet sent by the UE.

After obtaining the context of the UE, the target controller may determine, based on a location of a cell on which the UE camps before a handover and a location of the target cell, whether to change a forwarding plane gateway. If it is determined to change the forwarding plane gateway, the target controller may trigger a resource release process of a source side device by using the target eNB.

708. The target controller sends a path switch request response message to the target eNB, where the path switch request response message carries a GW-U change flag.

A sequence for performing step 707 and step 708 is not limited in this embodiment of the present invention.

709. After receiving the path switch request response message, the target eNB sends a resource release message to the source eNB, where the resource release message carries the GW-U change flag.

710. After receiving the resource release message, the source eNB sends the resource release message to the source controller, where the resource release message carries the GW-U change flag.

711. The source controller sends the resource release message to the source GW-U.

712. When receiving the resource release message, the source GW-U releases UE resources.

The source controller sends the resource release message to the source GW-U because of a GW-U change.

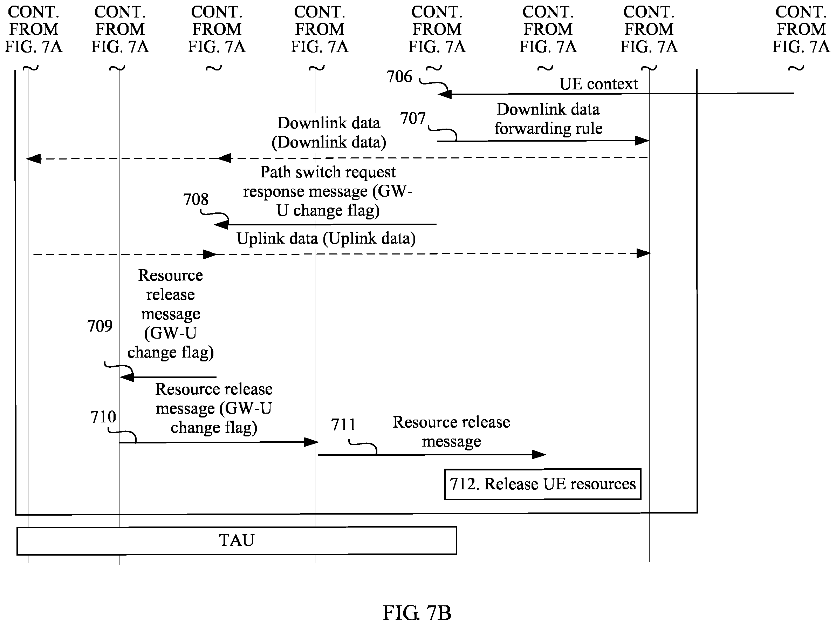

The embodiments of FIG. 6 and FIG. 7A and FIG. 7B separately describe a UE handover process in the CU network architecture. The target controller may obtain, from the target eNB, the source control plane ID and the UE context ID that are allocated by the source controller, to directly request the context of the UE from the source controller, or the context of the UE is synchronized to the target controller by using the database. In this way, an X2-interface-based handover across control planes is implemented, reducing a control plane delay and improving handover efficiency.

Further, compared with a prior-art X2-interface-based handover, during the prior-art X2-based handover, after a target eNB obtains source side information from an X2 interface and finds that a source control plane and the target eNB are not connected, the target eNB rejects the X2-based handover, and therefore a process of selecting a new control plane is not triggered. In other words, a handover across control planes cannot be performed during the prior-art X2-interface-based handover. However, in the embodiments of the present invention, the target eNB determines, based on information such as the source control plane identifier provided by the source eNB, whether a handover across controllers is to be performed; and if a handover across controllers is to be performed, selects a new controller as a target controller based on the load status, and sends the source control plane identifier and the UE context ID to the target controller. The target controller may obtain the context of the UE from the source controller based on the source control plane identifier, or synchronizes the context of the UE to the target controller by using the database, implementing an X2-interface-based handover method across control planes.

The following are apparatus embodiments of the present invention, and apparatuses may be used to implement the method embodiments of the present invention. For details not disclosed in the apparatus embodiments of the present invention, refer to the method embodiments of the present invention.

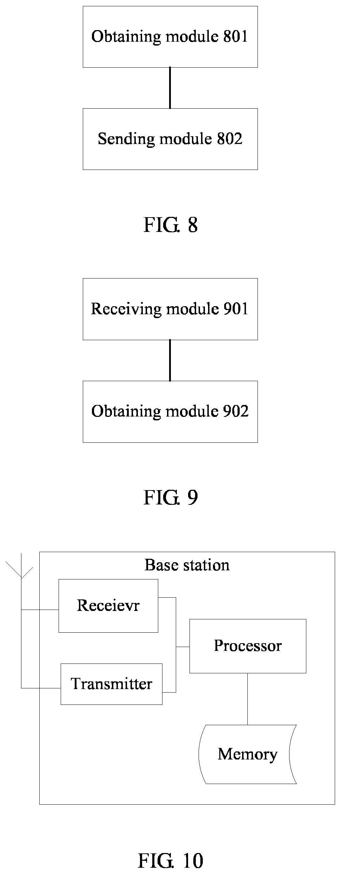

FIG. 8 is a schematic structural diagram of a base station according to an embodiment of the present invention. Referring to FIG. 8, the base station includes:
an obtaining module 801, configured to obtain an identifier of a source control plane and a context identifier of the UE from a source base station; and
a sending module 802, configured to send the identifier of the source control plane and the context identifier of the UE to a target control plane device, where the identifier of the source control plane and the context identifier of the UE are used to obtain a context of the UE.

In a possible implementation, the obtaining module 801 is configured to automatically establish a connection between the target base station and the source base station, and the target base station obtains the identifier of the source control plane and the context identifier of the UE by using the source base station.

In a possible implementation, the base station further includes a selection module, configured to: determine, based on the identifier of the source control plane, whether the target base station is connected to the source control plane; and if the target base station is not connected to the source control plane, select a control plane as a target control plane.

In a possible implementation, the base station further includes a release module, configured to trigger release of resources of a source side device.

In a possible implementation, the release module is configured to: when a source forwarding plane change flag sent by the target control plane is received, send a resource release message to the source base station, where the resource release message carries a source forwarding plane gateway change flag.

It should be noted that when the base station provided in the foregoing embodiment implements a user equipment handover function, description is provided only by using division of the foregoing function modules as an example. In actual application, the functions may be allocated to different function modules for implementation depending on actual requirements. To be specific, an internal structure of the device is divided into different function modules to implement all or part of the functions described above. For the apparatus in the foregoing embodiment, specific manners of performing operations by each module are described in detail in the embodiments related to the method, and no details are repeated herein.

FIG. 9 is a schematic structural diagram of a control plane device according to an embodiment of the present invention. Referring to FIG. 9, the control plane device includes:
a receiving module 901, configured to receive an identifier of a source control plane and a context identifier of UE that are sent by a target base station; and
an obtaining module 902, configured to obtain a context of the UE based on the identifier of the source control plane and the context identifier of the UE.

In a possible implementation, the obtaining module 902 is configured to: address to the source control plane based on the identifier of the source control plane; send a UE context request message to the source control plane, where the UE context request message carries the context identifier of the UE; and receive the context of the UE returned by the source control plane.

In a possible implementation, the obtaining module 902 is configured to obtain the context of the UE from a database by using the identifier of the source control plane and the context identifier of the UE as index information.

In a possible implementation, the control plane device further includes:
a determining module, configured to determine whether a forwarding plane gateway needs to change; and
a sending module, configured to: if the determining module determines that the forwarding plane gateway needs to change, send a source forwarding plane change flag to the target base station, where the source forwarding plane change flag is used to trigger release of resources of a source side device.

In a possible implementation, the control plane device includes a mobility management entity or a centralized control plane device.

It should be noted that when the control plane device provided in the foregoing embodiment implements a user equipment handover function of the control plane device, description is provided only by using division of the foregoing function modules as an example. In actual application, the functions may be allocated to different function modules for implementation depending on actual requirements. To be specific, an internal structure of the device is divided into different function modules to implement all or part of the functions described above. For the apparatus in the foregoing embodiment, specific manners of performing operations by each module are described in detail in the embodiments related to the method, and no details are repeated herein.

Referring to FIG. 10, FIG. 10 is a schematic structural diagram of a base station according to an embodiment of the present invention. As shown in the figure, the base station includes a transmitter, a receiver, a memory, and a processor separately connected to the transmitter, the receiver, and the memory. Certainly, the base station may further include general purpose components such as an antenna, a baseband processing component, an intermediate-frequency processing component, and an input/output apparatus, and no limitation is imposed thereon in this embodiment of the present invention.

The base station is configured to perform the user equipment handover method on a base station side provided in any embodiment in FIG. 3, FIG. 4A and FIG. 4B, FIG. 6, or FIG. 7A and FIG. 7B.

The transmitter and the receiver may alternatively be a transceiver. The processor may be a central processing unit (CPU), a microprocessor, a single-chip microcomputer, or the like.

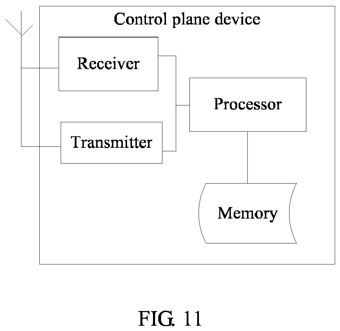

Referring to FIG. 11, FIG. 11 is a schematic structural diagram of a control plane device according to an embodiment of the present invention. As shown in the figure, the control plane device includes a transmitter, a receiver, a memory, and a processor separately connected to the transmitter, the receiver, and the memory. Certainly, the control plane device may further include general purpose components such as an antenna, a baseband processing component, an intermediate-frequency processing component, and an input/output apparatus, and no limitation is imposed thereon in this embodiment of the present invention.

The control plane device is configured to perform the user equipment handover method on a control plane device side provided in any embodiment in FIG. 3, FIG. 4A and FIG. 4B, FIG. 6, or FIG. 7A and FIG. 7B.

A person skilled in the art can easily figure out another implementation solution of the present invention after considering the specification and practicing the present invention disclosed herein. This application is intended to cover any variations, functions, or adaptive changes of the present invention. These variations, functions, or adaptive changes comply with general principles of the present invention, and include common knowledge or a commonly used technical means in the technical field that is not disclosed in the present invention. The specification and the embodiments are merely considered as examples, and the actual scope of the present invention are pointed out by the following claims.

It should be understood that the present invention is not limited to the accurate structures that are described in the foregoing and that are shown in the accompanying drawings, and modifications and changes may be made without departing from the scope of the present invention. The scope of the present invention is limited only by the appended claims.

## Claims

1. A user equipment, UE, handover method, comprising:
obtaining (301), by a target base station, an identifier of a source control plane and a context identifier of a UE from a source base station; and
sending (302), by the target base station, the identifier of the source control plane and the context identifier of the UE to a target control plane device, wherein the identifier of the source control plane and the context identifier of the UE are used to obtain a context of the UE; wherein the method further comprises:
determining, by the target base station based on the identifier of the source control plane, whether the target base station is connected to the source control plane; and
if the target base station is not connected to the source control plane, selecting, by the target base station, a control plane as a target control plane.

2. The method according to claim 1, wherein the obtaining (301), by a target base station, an identifier of a source control plane and a context identifier of UE from a source base station comprises:
automatically establishing, by the target base station, a connection between the target base station and the source base station, and obtaining, by the target base station, the identifier of the source control plane and the context identifier of the UE from the source base station.

3. The method according to any one of claims 1 or 2, wherein the method further comprises:
triggering, by the target base station, release of resources of a source side device.

4. The method according to claim 3, wherein the triggering, by the target base station, release of resources of a source side device comprises:
when the target base station receives a source forwarding plane change flag sent by the target control plane, sending by the target base station, a resource release message to the source base station, wherein the resource release message carries a source forwarding plane gateway change flag.

5. The method according to any one of claims 1 to 4, wherein the control plane device comprises a mobility management entity or a centralized control plane device.

6. A user equipment, UE, handover method for a CU separation mobile network architecture, comprising:
receiving (602), by a target control plane device, an identifier of a source control plane and a context identifier of a UE that are sent by a target base station; and
obtaining (606), by the target control plane device, a context of the UE based on the identifier of the source control plane and the context identifier of the UE; wherein the method further comprises:
determining, by the target control plane device, whether a forwarding plane gateway needs to change; and
if the forwarding plane gateway needs to change, sending (607), by the target control plane device, a source forwarding plane change flag to the target base station, wherein the source forwarding plane change flag is used to trigger release of resources of a source side device.

7. The method according to claim 6, wherein the obtaining (606), by the target control plane device, a context of the UE based on the identifier of the source control plane and the context identifier of the UE comprises:
addressing, by the target control plane device, to the source control plane based on the identifier of the source control plane, and sending a UE context request message to the source control plane, wherein the UE context request message carries the context identifier of the UE; and
receiving, by the target control plane device, the context of the UE returned by the source control plane.

8. The method according to claim 6 or 7, wherein the obtaining (606), by the target control plane device, a context of the UE based on the identifier of the source control plane and the context identifier of the UE comprises:
obtaining, by the target control plane device, the context of the UE from a database by using the identifier of the source control plane and the context identifier of the UE as index information.

9. The method according to any one of claims 6 to 8, wherein the control plane device comprises a mobility management entity or a centralized control plane device.

10. A base station, configured to perform the method according to any one of claims 1-5.

11. A control plane device, configured to perform the method according to any one of claims 6-9.

12. A wireless communications system, wherein the wireless communications system comprises at least a user equipment UE, a source base station, a target base station according to claim 10, a source control plane device, and a target control plane device.

## Patentansprüche

1. Benutzervorrichtungs-, UE, Übergabeverfahren, umfassend:
Erhalten (301), durch eine Zielbasisstation, einer Kennung einer Quellsteuerebene und einer Kontextkennung einer UE von einer Quellbasisstation; und
Senden (302), durch die Zielbasisstation, der Kennung der Quellsteuerebene und der Kontextkennung des UE an eine Zielsteuerebenenvorrichtung, wobei die Kennung der Quellsteuerebene und die Kontextkennung der UE verwendet werden, um einen Kontext der UE zu erhalten; wobei das Verfahren ferner umfasst:
Bestimmen, durch die Zielbasisstation basierend auf der Kennung der Quellensteuerebene, ob die Zielbasisstation mit der Quellensteuerebene verbunden ist; und
wenn die Zielbasisstation nicht mit der Quellensteuerebene verbunden ist, Auswählen, durch die Zielbasisstation, einer Steuerebene als Zielsteuerebene.

2. Verfahren nach Anspruch 1, wobei das Erhalten (301), durch eine Zielbasisstation, einer Kennung einer Quellsteuerebene und einer Kontextkennung der UE von einer Quellbasisstation umfasst:
automatisches Herstellen, durch die Zielbasisstation, einer Verbindung zwischen der Zielbasisstation und der Quellbasisstation, und Erhalten, durch die Zielbasisstation, der Kennung der Quellsteuerebene und der Kontextkennung der UE von der Quellbasisstation.

3. Verfahren nach einem der Ansprüche 1 oder 2, wobei das Verfahren ferner umfasst:
Auslösen, durch die Zielbasisstation, einer Freigabe von Ressourcen einer quellenseitigen Vorrichtung.

4. Verfahren nach Anspruch 3, wobei das Auslösen, durch die Zielbasisstation, von Ressourcen einer quellenseitigen Vorrichtung umfasst:
wenn die Zielbasisstation ein durch die Zielsteuerebene gesendetes Quell-Übergabeebenen-Änderungsflag empfängt, Senden, durch die Zielbasisstation, einer Ressourcen-Freigabenachricht an die Quellbasisstation, wobei die Ressourcen-Freigabenachricht ein Quell-Übergabeebenen-Gateway-Änderungsflag trägt.

5. Verfahren nach einem der Ansprüche 1 bis 4, wobei die Steuerebenenvorrichtung eine Mobilitätsverwaltungseinheit oder eine zentralisierte Steuerebenenvorrichtung umfasst.

6. Benutzervorrichtungs-, UE, Übergabeverfahren für eine CU-Separations-Mobilfunknetzarchitektur, umfassend:
Empfangen (602), durch eine Zielsteuerebenenvorrichtung, einer Kennung einer Quellsteuerebene und einer Kontextkennung einer UE, die von einer Zielbasisstation gesendet werden; und
Erhalten (606), durch die Zielsteuerebenenvorrichtung, eines Kontexts der UE basierend auf der Kennung der Quellsteuerebene und der Kontextkennung der UE;
wobei das Verfahren ferner umfasst:
Bestimmen, durch die Zielsteuerebenenvorrichtung, ob ein Übergabeebenen-Gateway geändert werden muss; und
wenn das Übergabeebenen-Gateway geändert werden muss, Senden (607), durch die Zielsteuerebenenvorrichtung, eines Quell-Übergabeebenen-Änderungsflag an die Zielbasisstation, wobei das Quell-Übergabeebenen-Änderungsflag verwendet wird, um eine Freigabe von Ressourcen einer quellenseitigen Vorrichtung auszulösen.

7. Verfahren nach Anspruch 6, wobei das Erhalten (606), durch die Zielsteuerebenenvorrichtung, eines Kontexts der UE basierend auf der Kennung der Quellsteuerebene und der Kontextkennung der UE umfasst:
Adressieren, durch die Zielsteuerebenenvorrichtung, an die Quellsteuerebene basierend auf der Kennung der Quellsteuerebene, und Senden einer UE-Kontextanforderungsnachricht an die Quellsteuerebene, wobei die UE-Kontextanforderungsnachricht die Kontextkennung der UE trägt; und
Empfangen, durch die Zielsteuerebenenvorrichtung, des Kontexts der UE, der von der Quellsteuerebene zurückgegeben wird.

8. Verfahren nach Anspruch 6 oder 7, wobei das Erhalten (606), durch die Zielsteuerebenenvorrichtung, eines Kontexts der UE basierend auf der Kennung der Quellsteuerebene und der Kontextkennung der UE umfasst:
Erhalten, durch die Zielsteuerebenenvorrichtung, des Kontexts des UE aus einer Datenbank unter Verwendung der Kennung der Quellsteuerebene und der Kontextkennung des UE als Indexinformationen.

9. Verfahren nach einem der Ansprüche 6 bis 8, wobei die Steuerebenenvorrichtung eine Mobilitätsverwaltungseinheit oder eine zentralisierte Steuerebenenvorrichtung umfasst.

10. Basisstation, die konfiguriert ist, das Verfahrens nach einem der Ansprüche 1 bis 5 durchzuführen.

11. Steuerebenenvorrichtung, die konfiguriert ist, das Verfahren nach einem der Ansprüche 6 bis 9 durchzuführen.

12. Drahtloses Kommunikationssystem, wobei das drahtlose Kommunikationssystem mindestens eine Benutzervorrichtung, UE, eine Quellbasisstation, eine Zielbasisstation nach Anspruch 10, eine Quellsteuerebenenvorrichtung und eine Zielsteuerebenenvorrichtung umfasst.

## Revendications

1. Procédé de transfert intercellulaire d'un équipement utilisateur, UE (user equipment), comprenant les étapes consistant à :
obtenir (301), par une station de base de destination, un identifiant d'un plan de contrôle de départ et un identifiant de contexte d'un UE à partir d'une station de base de départ ; et
envoyer (302), par la station de base de destination, l'identifiant du plan de contrôle de départ et l'identifiant de contexte de l'UE à un dispositif du plan de contrôle de destination, dans lequel l'identifiant du plan de contrôle de départ et l'identifiant de contexte de l'UE sont utilisés pour obtenir un contexte de l'UE ; dans lequel le procédé comprend en outre les étapes consistant à :
déterminer, par la station de base de destination, sur la base de l'identifiant du plan de contrôle de départ, si la station de base de destination est connectée au plan de contrôle de départ ; et
si la station de base de destination n'est pas connectée au plan de contrôle de départ, sélectionner, par la station de base de destination, un plan de contrôle comme plan de contrôle de destination.

2. Procédé selon la revendication 1, dans lequel l'obtention (301), par une station de base de destination, d'un identifiant d'un plan de contrôle de départ et d'un identifiant de contexte de l'UE à partir d'une station de base de départ comprend les étapes consistant à :
établir automatiquement, par la station de base de destination, une connexion entre la station de base de destination et la station de base de départ, et obtenir, par la station de base de destination, l'identifiant du plan de contrôle de départ et l'identifiant de contexte de l'UE à partir de la station de base de départ.

3. Procédé selon l'une quelconque des revendications 1 ou 2, dans lequel le procédé comprend en outre l'étape consistant à :
déclencher, par la station de base de destination, la libération des ressources d'un dispositif du côté de départ.

4. Procédé selon la revendication 3, dans lequel le déclenchement, par la station de base de destination, de la libération des ressources d'un dispositif du côté de départ comprend l'étape consistant à :
lorsque la station de base de destination reçoit un indicateur de changement du plan d'acheminement de départ envoyé par le plan de contrôle de destination, envoyer, par la station de base de destination, un message de libération des ressources à la station de base de départ, dans lequel le message de libération des ressources porte un indicateur de changement de passerelle du plan d'acheminement de départ.

5. Procédé selon l'une quelconque des revendications 1 à 4, dans lequel le dispositif du plan de contrôle comprend une entité de gestion de la mobilité ou un dispositif de plan de contrôle centralisé.

6. Procédé de transfert intercellulaire d'un équipement utilisateur, UE, pour une architecture de réseau mobile à séparation de CU, comprenant les étapes consistant à :
recevoir (602), par un dispositif du plan de contrôle de destination, un identifiant d'un plan de contrôle de départ et un identifiant de contexte d'un UE qui sont envoyés par une station de base de destination ; et
obtenir (606), par le dispositif du plan de contrôle de destination, un contexte de l'UE basé sur l'identifiant du plan de contrôle de départ et sur l'identifiant de contexte de l'UE ; dans lequel le procédé comprend en outre les étapes consistant à :
déterminer, à l'aide du dispositif du plan de contrôle de destination, si une passerelle de plan d'acheminement doit être modifiée ; et
si la passerelle du plan d'acheminement doit être modifiée, envoyer (607), par le dispositif du plan de contrôle de destination, un indicateur de changement du plan d'acheminement de départ à la station de base de destination, dans lequel l'indicateur de changement de plan d'acheminement de départ est utilisé pour déclencher la libération de ressources d'un dispositif du côté de départ.

7. Procédé selon la revendication 6, dans lequel l'obtention (606), par le dispositif du plan de contrôle de destination, d'un contexte de l'UE basé sur l'identifiant du plan de contrôle de départ et sur l'identifiant de contexte de l'UE comprend les étapes consistant à :
s'adresser, par le dispositif du plan de contrôle de destination, au plan de contrôle de départ en fonction de l'identifiant du plan de contrôle de départ, et envoyer un message de demande de contexte de l'UE au plan de contrôle de départ, dans lequel le message de demande de contexte de l'UE porte l'identifiant de contexte de l'UE ; et
recevoir, par le dispositif du plan de contrôle de destination, le contexte de l'UE renvoyé par le plan de contrôle de départ.

8. Procédé selon les revendications 6 ou 7, dans lequel l'obtention (606), par le dispositif du plan de contrôle de destination, d'un contexte de l'UE basé sur l'identifiant du plan de contrôle de départ et sur l'identifiant de contexte de l'UE comprend l'étape consistant à :
obtenir, par le dispositif du plan de contrôle de destination, le contexte de l'UE d'une base de données en utilisant l'identifiant du plan de contrôle de départ et l'identifiant de contexte de l'UE comme informations d'index.

9. Procédé selon l'une quelconque des revendications 6 à 8, dans lequel le dispositif du plan de contrôle comprend une entité de gestion de la mobilité ou un dispositif de plan de contrôle centralisé.

10. Station de base, configurée pour mettre en oeuvre le procédé selon l'une quelconque des revendications 1 à 5.

11. Dispositif du plan de contrôle, configuré pour mettre en oeuvre le procédé selon l'une quelconque des revendications 6 à 9.

12. Système de communications sans fil, dans lequel le système de communications sans fil comprend au moins un équipement d'utilisateur UE, une station de base de départ, une station de base de destination selon la revendication 10, un dispositif de plan de contrôle de départ et un dispositif de plan de contrôle de destination.
